Europäisches Patentamt

European Patent Office

Office européen des brevets

(11) Publication number: **0 057 984**
**A2**

## (12) EUROPEAN PATENT APPLICATION

(21) Application number: **82300242.3**

(22) Date of filing: **18.01.82**

(51) Int. Cl.³: **G 12 B 9/06**

(30) Priority: **26.01.81 US 228141**

(43) Date of publication of application:
**18.08.82 Bulletin 82/33**

(84) Designated Contracting States:
**BE CH DE FR GB IT LI NL**

(71) Applicant: **NRC, Inc.**
**45 Industrial Place**
**Newton Massachusetts 02164(US)**

(72) Inventor: **Sullivan, Paul**
**48 Parks Drive**
**Sherborn Massachusetts(US)**

(74) Representative: **Jones, Ian et al,**
**POLLAK MERCER & TENCH High Holborn House 52-54**
**High Holborn**
**London WC1V 6RY(GB)**

(54) **Instrument housing.**

(57) A thermowell assembly of refractory metal facing with practical usage of massive base metal mounting through a clamping construction of refractory metal components straddling the base metal and molded with air gap backing of the weld joint in the interior of the assemblage to prevent refractory weld contamination by the base metal.

Fig. 1

EP 0 057 984 A2

-1-

INSTRUMENT HOUSING

DESCRIPTION

The present invention relates to an instrument housing for use in hot and/or corrosive environments which require employment of refractory metal, for example tantalum, or molybdenum, tungsten, columbium or zirconium. Such housings or probe covers are for use in industrial processing equipment.

Tantalum and other refractory metal prices have multiplied several-fold in the 1970's, making employment of these metals for instrument housings or thermowells economically prohibitive in many applications. Efforts to redesign parts made of such metals to allow substitute materials, for example glass or base metals (iron and steel) to be used in whole or in part have not been successful in applications involving high temperature and/or severely corrosive conditions.

The invention accordingly provides an instrument housing comprising refractory metal members clamping together over a base metal mounting member providing mounting means for the housing as a whole, the refractory metal members being welded together at a linear joint, and the mounting member being shaped to co-operate with the refractory metal members to provide an air gap in the interior of the assembly backing the weld joint to avoid weld contamination thereat.

The invention also provides a thermowell assembly comprising

(a)   a refractory metal well member having a first flange,

(b) a base metal mounting member having a second flange, the second flange overlaying the first flange,

(c) a refractory metal clamp member overlying the second flange and spanning it to meet the first flange at a weld connection

(d) the first flange and second flange contacts providing an air gap substantially over the weld joint to prevent weld contamination.

The invention thus makes it possible to provide instrument housings or probes, in particular thermowells and the like, for high temperature and/or corrosive environments requiring refractory metal surfaces for exposure to the environment, in which massive base metal interiors can be incorporated in a practical and economic way.

The invention is described below, by way of example, with reference to the accompanying drawings, in which:

Figure 1 is an exploded side view, partially in section, of a thermowell assembly embodying the invention; and

Figure 2 is an end-on view in the direction indicated by arrows 2-2 in Figure 1.

The illustrated thermowell assembly comprises a Thermowell member 10, a mounting member 20, and a clamp member 30. The thermowell and clamp members 10,30 are made of refractory metal for example tantalum and the mounting member 20 is made of a base metal for example steel.

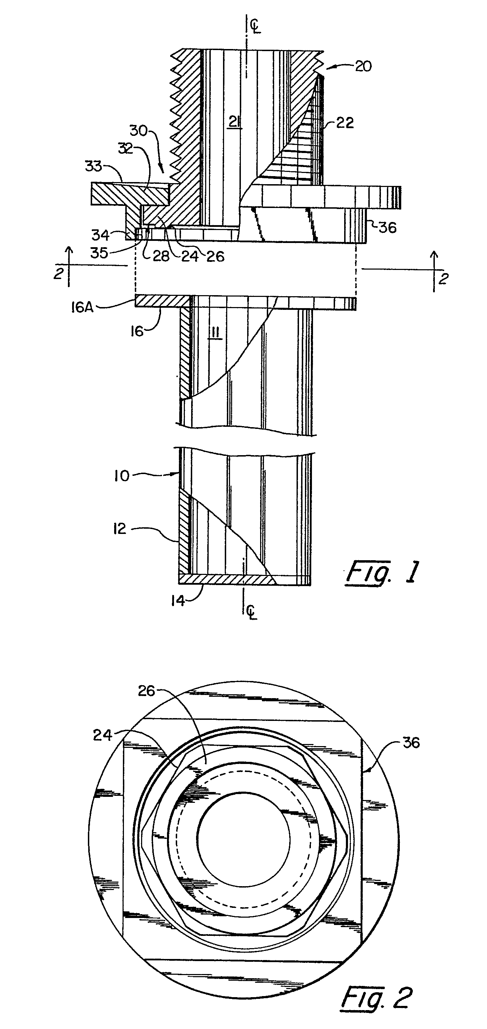

The thermowell member has a hollow cylindrical well portion 12 with an interior 11, a base portion 14, and a flange portion 16. The mounting member 20 has the form of a hollow headed bolt, the interior 21 of which communicates with the well portion interior 11 where the members 10 and 20 are assembled together. The mounting portion 20 has a threaded shank 22 by which the whole assembly is mounted in its place of use and a hexagonally faced head 24, which is top milled to leave a sealing ring 26 spaced inwardly from the hexagonal corners but touching the hexagon faces as shown in Figure 2. The head 24 engages the flange 16 by way of the sealing ring 26, so forming an air space 28 at the outer edge of the flange 16.

The clamp member 30 has a dish portion 32 with a dished top face 33, and a depending cylindrical portion 36 of which the end portion 34 is stepped at 35 to provide a bent weld joint junction with the outer edge of flange 16.

When the parts members 10, 20 and 30 are assembled together, the weld is made, the air gap at 28 being enhanced by the bend at the joint between the cylindrical edge 16A of the flange 16 and the step 35 and the inherent spacing between the circular interior of the cylindrical portion 34, the inward spacing of the ring 26 and the hexagonal facing of the head 24. This avoids contamination of the well and allows use in practise of the low cost massive mounting member 20 made of steel in lieu of refractory metal. The assembly as a whole provides aligned interiors 11 and 21 through which a temperature (or other) measuring instrument may be inserted. Complete protection against a corrosive, high temperature environment is afforded by the refractory metal face of the cylindrical portion 36, the flange 16, the well portion 12 and the base portion 14; these are exposed to the environment and completely shield the mounting portion 20 (as well as the instrument) therefrom.

CLAIMS:

1. An instrument housing comprising refractory metal members (10,30) clamping together over a base metal mounting member (20) providing mounting means (22) for the housing as a whole, the refractory metal members (10,30) being welded together at a linear joint, and the mounting member (20) being shaped to co-operate with the refractory metal members (10,30) to provide an air gap (28) in the interior of the assembly backing the weld joint to avoid contamination thereat .

2. An instrument housing as claimed in claim 1 having sealing ring means (24) between opposed faces of the mounting member (20) and one (10) of the refractory metal members, the weld joint between the refractory metal members extending around the sealing ring means.

3. A thermowell assembly comprising:

(a) a refractory metal well member (10) having a first flange (16),

(b) a base metal mounting member (10) having a second flange (24), the second flange overlaying the first flange,

(c) a refractory metal clamp member (30) overlying the second flange and spanning it to meet the first flange at a weld connection,

(d) the first flange and second flange contacts providing an air gap (28) substantially over the weld joint to prevent weld contamination.

4. A thermowell assembly as claimed in claim 3 wherein mounting member (10) is constructed to effect linear contact with the said first flange at a part thereof not adjacent the weld joint and wherein the weld joint comprises a bend to further isolate the gap.

Fig. 1

Fig. 2